Europäisches Patentamt

European Patent Office

Office européen des brevets

(19)

(11) Veröffentlichungsnummer: **0 054 802**
B1

(12) # EUROPÄISCHE PATENTSCHRIFT

(45) Veröffentlichungstag der Patentschrift:
14.03.84

(51) Int. Cl.³: **E 04 B 1/58**, E 04 B 1/26

(21) Anmeldenummer: **81110173.2**

(22) Anmeldetag: **04.12.81**

(54) **Verbindung von Trägern mit einer durchgehenden Stütze.**

(30) Priorität: **12.12.80 DE 3046790**

(43) Veröffentlichungstag der Anmeldung:
**30.06.82 Patentblatt 82/26**

(45) Bekanntmachung des Hinweises auf die Patenterteilung:
**14.03.84 Patentblatt 84/11**

(84) Benannte Vertragsstaaten:
**CH FR GB LI NL SE**

(56) Entgegenhaltungen:
**CH - A - 500 349
DE - A - 1 904 738
DE - A - 2 838 053**

(73) Patentinhaber: **STREIF AG, D-5461 Vettelschoss über Linz/Rhein (DE)**

(72) Erfinder: **Meickl, Gerhard, Dipl.-Ing., Bergstrasse 13, D-5461 Ockenfels (DE)**

(74) Vertreter: **Tiedtke, Harro, Dipl.-Ing. et al, Patentanwaltsbüro Tiedtke-Bühling-Kinne-Grupe-Pellmann-Grams Bavariaring 4, D-8000 München 2 (DE)**

## Verbindung von Trägern mit einer durchgehenden Stütze

Die Erfindung betrifft die Verbindung von Trägern mit einer durchgehenden Stütze aus Holz mit Hilfe von Elementen, wie sie im Oberbegriff des Hauptanspruchs 1 beschrieben sind.

Bei einer bekannten Verbindung der angegebenen Art, vgl. DE-A-2 838 053, lassen sich die für den vorgefertigten Skelettbau entwickelten Platten, das sind die Auflagerplatten für die Stützen und die an den Stirnflächen von Trägern angeordneten Hakenplatten verhältnismäßig einfach in Träger und eingeschossige Stützen einbauen. In der genannten Offenlegungsschrift sind auch Möglichkeiten aufgezeigt, in durchgehende Stützen durch Einschlitzen von beispielsweise orthogonal sich kreuzenden Schlitzen zweigeteilte Auflagerplatten mit besonderer Ausführung einzubauen. Diese, in den Schlitzen ineinander steckbaren Platten, haben den Nachteil, daß die Last nur von der Platte abgetragen wird, in die der Haken des Trägers eingreift.

Bei starren, durch Verschweißung miteinander verbundenen oder auch stranggepreßten, einstückigen Kreuzungsplatten dagegen beteiligen sich auch die Befestigungsmittel der Querplatte an der Lastübertragung. Namentlich bei einseitiger, aber auch bei zweiseitiger Lasteinleitung in eine kreuzförmige, einstückige Auflagerplatte können wesentlich größere Auflagerkräfte übertragen werden, als bei zwei ebenen, geschlitzten Platten, die in den Schlitzen erst zu einem Kreuz ineinander geschoben werden.

Der Erfindung liegt daher die Aufgabe zugrunde, einstückige, kreuzförmige Auflagerplatten in eine durchgehende Stütze industriell und rationell so einzubauen, daß bei einseitiger oder zweiseitiger Lasteinleitung die Befestigungselemente der Querplatte sich an der Aufnahme dieser Lasten beteiligen und die Stütze am Anschluß der Träger eine kleinstmögliche Querschnittsschwächung erfährt.

Die Lösung der gestellten Aufgabe besteht darin, daß die Stütze mit verleimtem Keilzinkenstoß im Bereich der einstückig ausgebildeten Auflagerplatte unterhalb der Auflagerflächen der Auflagerplatte gestoßen ist. Beim erfindungsgemäßen Zusammenleimen der Stützenteile im Keilzinkenstoß wird erreicht, daß die Auflagerplatte die Wirkung eines Zentrierteils für beide Stützenteile übernimmt, so daß eine paßgenaue Zusammenfügung zwangsläufig erreicht wird.

Das Zusammenfügen von Holzquerschnitten durch Keilzinkenverleimung zu einem biegesteifen Querschnitt ist eine bekannte Technik. Dennoch liegt es für den Fachmann keineswegs nahe, den Keilzinkenstoß dorthin zu legen, wo er von der Auflagerplatte mindestens in einer Richtung durchdrungen wird. Man würde eher erwarten, daß der Keilzinkenstoß ans obere Ende des Schlitzes verlegt wird, weil dann der Schlitz nur in die Stirnfläche des unteren Stützenteils eingefräst werden müßte.

Ein zweckmäßiges Verfahren zum Herstellen einer Verbindung besteht darin, daß zunächst die Stoßflächen gezinkt werden, daß dann die in der Zinkung nur zusammengesteckten Stützenteile ohne Verleimung gemeinsam gehobelt werden, daß die notwendigen Schlitze jeweils in die miteinander zu stoßenden Stützenteile eingebracht und die Bohrungen für die Befestigungsmittel der Auflagerplatten erstellt werden, daß die Auflagerplatte in die Schlitze des unterhalb des Stoßes liegenden Stützenteils eingesteckt wird, daß auf die zu verleimenden Flächen der Leim aufgetragen wird, die mit Leim versehenen Flächen gegeneinander gepreßt und im verpreßten Zustand die Befestigungsmittel eingetrieben werden, und daß nach dem Eintreiben der Befestigungsmittel die Verpressung aufgehoben wird, so daß die Aushärtung unter dem haltenden Einfluß der Befestigungsmittel stattfinden kann, weil dann die Kreuzplatte in Verbindung mit deren Befestigungsmittel als Lasche und Verdübelungselement des geleimten Keilzinkenstoßes wirksam wird.

Die Erfindung wird nachstehend an einem Ausführungsbeispiel erläutert, es zeigt

Fig. 1 in isometrischer Darstellung einen Skelettknoten mit einer Stütze und mit 4 Trägern in orthogonaler Anordnung,

Fig. 2 in isometrischer Darstellung die Lage des Keilzinkenstoßes zur Auflagerplatte,

Fig. 3 in isometrischer Darstellung schematisiert die Arbeitstakte des Verfahrens zum Einbau kreuzförmiger Auflagerplatten in durchgehende Stützen.

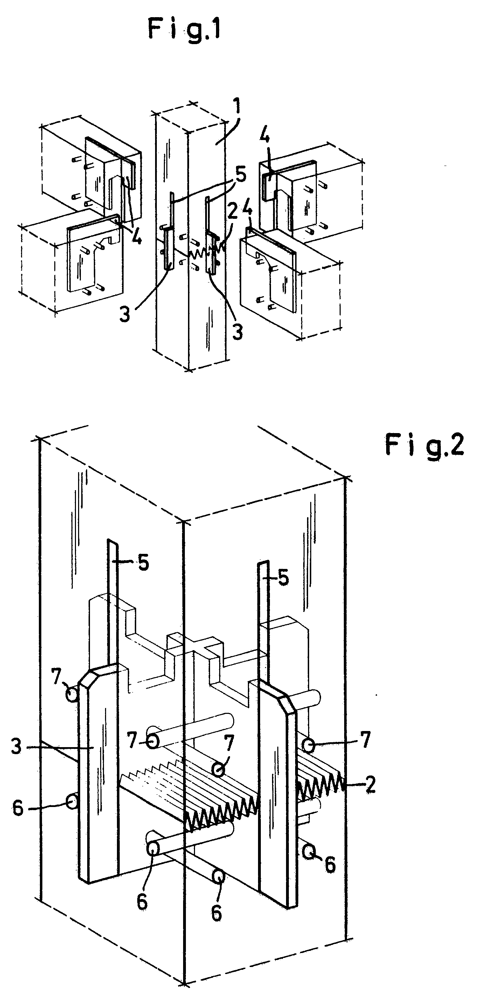

In Fig. 1 zeigt die durchgehende Stütze 1 den Keilzinkenstoß 2 in Höhe der eingelassenen kreuzförmigen Auflagerplatte 3 und die für den Anschluß vorgesehenen Trägerköpfe mit ihren Hakenplatten 4. Im vorliegenden Beispiel liegen alle Träger in derselben Höhe und besitzen die gleichen Abmessungen. Die Hakenplatten 4 greifen in die Schlitze 5 ein und setzen sich auf die Auflagerplatte 3 ab. Im zusammengefügten Zustand ist der Keilzinkenstoß 2 nicht mehr sichtbar. Über die Oberkante der Träger hinaus ist der Schlitz 5 in der Stütze 1 frei zugänglich. Im Bedarfsfall lassen sich Paßstücke in den Schlitz 5 einfügen, so daß es zu einer Verriegelung der Träger mit der Stütze 1 kommt. So könnte z. B. einem unbeabsichtigten Aushängen der Träger begegnet werden.

In Fig. 2 sind in isometrischer Darstellung der Keilzinkenstoß 2 dargestellt, wie er von der kreuzförmigen Auflagerplatte 3 durchdrungen wird. Die Darstellung macht deutlich, daß die kreuzförmige Auflagerplatte 3 eine Zentrierung der Stützenteile bewirkt und sich wie eine zusätzliche Verdübelung der Stützenflächen auswirkt. Die dargestellten Stabdübel 6 verdübeln die Auflagerplatte 3 mit dem unteren Stützenteil, die Stabdübel 7 mit dem oberen Stützenteil. Durch die Lage des Keilzinkenstoßes 2 zwischen

den Stabdübeln 6 und 7 wirkt sich die Auflagerplatte 3 auch als Verbindungsmittel der beiden Stützenteile aus. Zugkräfte auf den Stützenstoß werden von der verleimten Keilzinkung, aber auch von der eingedübelten Auflagerplatte 3 übertragen.

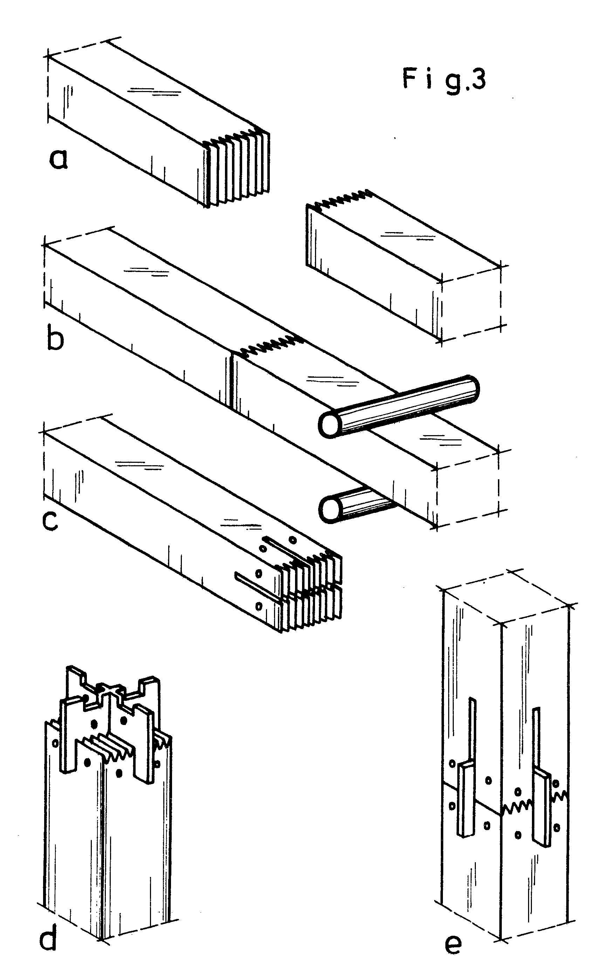

Zur Erläuterung des erfindungsgemäßen Verfahrens zum Einbau von einstückigen Auflagerplatten in durchgehende Stützen dient Fig. 3.

In Fig. 3 sind die fünf Arbeitsphasen zum Verfahren des Einbaus kreuzförmiger Auflagerplatten in durchgehende Stützen dargestellt.

In der Arbeitsphase a
werden in die Stirnflächen der Stützenteile Zinken gefräst.
In der Arbeitsphase b
ist die in der Keilzinkung ohne Verleimung zusammengestoßene Stütze in Bearbeitung. Alle Flächen werden beispielsweise gemeinsam gehobelt.
In der Arbeitsphase c
ist die durch Keilzinken vorbereitete Stirnfläche dargestellt, wie sie Bohrungen für die Stabdübel und die Schlitze erhält.
In der Arbeitsphase d
ist in den unteren Stützenteil, dessen Keilzinkenflächen bereits einen Leimauftrag erhalten haben, die kreuzförmige Auflagerplatte eingesetzt und mit den Stabdübeln verdübelt.
In der Arbeitsphase e
wird der obere Stützenteil aufgepreßt, auch die anderen Stabdübel werden eingeschlagen, die den geleimten Stützenstoß nunmehr sichern und eine längere Verpressung unnötig machen.

Am Beispiel der durchgehenden quadratischen Stütze wurde das Verfahren des Einbaus von Auflagerplatten in durchgehende Stützen erläutert. Bei der industriellen Fertigung stellt sich diese Art des Einbaus insofern als sehr rationell heraus, als ein Überschuß an in der Keilzinkung aufgetragenem Leim keine nachteiligen Folgen haben kann. Würde der Keilzinkenstoß oberhalb der Auflagerplatten liegen, so würde der aus der Keilzinkung in die Schlitze 5 austretende Überschußleim ausgehärtet, eine Behinderung beim Einfädeln der Hakenplatte darstellen oder gar die Auflagerflächen für die Hakenplatte verlegen, so daß die erforderliche Maßgenauigkeit des Zusammenbaus nicht mehr gewährleistet wäre. Bei dem Einbau nach dem erfindungsgemäßen Verfahren kann der Überschußleim eine derartige Verlegung der Schlitze nicht verursachen.

Darüber hinaus besitzt eine nach dem erfindungsgemäßen Verfahren hergestellte durchgehende Stütze mit kreuzförmiger, einstückiger Auflagerplatte im Stoß selbst keine Schwächung, weil die eingesetzte Hakenplatte eine Laschung des Stoßes darstellt. Die Stütze selbst ist nur durch die relativ schmalen Schlitze 5 oberhalb des Stoßes geschwächt.

## Patentansprüche

1. Verbindung von Trägern mit einer durchgehenden Stütze (1) aus Holz, bestehend aus einer am Träger parallel zu dessen Längsrichtung und in dessen Längsachse verdrehsicher befestigten, lotrecht stehend angeordneten Platte (4) mit einem Haken, der an seinem unteren Ende eine im wesentlichen horizontale Auflagerfläche und mindestens eine vertikale Anlagefläche aufweist und aus einer in der Stütze (1) angeordneten, kreuzförmig ausgebildeten einstückigen Auflagerplatte (3), deren Plattenteile lotrecht stehend mit der entsprechenden Hakenplatte (4) in einer Ebene liegen und Paßflächen für die Auflagerfläche und die Anlagefläche des Hakens aufweisen, dadurch gekennzeichnet, daß die Stütze mit verleimten Keilzinkenstoß (2) im Bereich der einstückig ausgebildeten Auflagerplatte (3) unterhalb der Auflagerflächen der Auflagerplatte (3) gestoßen ist.

2. Verfahren zum Herstellen einer Verbindung nach Anspruch 1, dadurch gekennzeichnet, daß zunächst die Stoßflächen gezinkt werden, daß dann die in der Zinkung nur zusammengesteckten Stützenteile ohne Verleimung gemeinsam gehobelt werden, daß die notwendigen Schlitze (5) jeweils in die miteinander zu stoßenden Stützenteile eingebracht und die Bohrungen für die Befestigungsmittel der Auflagerplatten erstellt werden, daß die Auflagerplatte (3) in die Schlitze (5) des unterhalb des Stoßes liegenden Stützenteils eingesteckt wird, daß auf die zu verleimenden Flächen der Leim aufgetragen wird, die mit Leim versehenen Flächen gegeneinander gepreßt und im verpreßten Zustand die Befestigungsmittel eingetrieben werden, und daß nach dem Eintreiben der Befestigungsmittel die Verpressung aufgehoben wird, so daß die Aushärtung unter dem haltenden Einfluß der Befestigungsmittel stattfinden kann.

## Claims

1. A connection of beams with a through-going wooden pillar (1), comprising a perpendicularly arranged plate (4) having a hook and being fastened to said beam in torsionproof manner in parallel with its longitudinal direction and in its longitudinal axis, said hook having at its lower end an essentially horizontal supporting area and at least one vertical contact area, and a one-piece support plate (3) being disposed in said pillar (1) and formed crosswise, the plate portions of said support plate extending perpendicularly in the same plane as the respective hooked plate (4) and having fitting areas for said supporting area and said contact area of said hook, characterized in that said pillar with glued wedge-shaped tenon joint (2) is butt-jointed in the region of said one-piece support plate (3) below said supporting areas of said support plate (3).

2. A method of producing a connection according to claim 1, characterized in that at first the abutting ends are tenoned, then the pillar parts which are only put together at the tenon joint without glueing are jointly planed, then the necessary slots (5) are cut into the respective pillar parts to be butt-jointed and the bores for the fastening means of said support plates are drilled, in that said support plate (3) is inserted into said slots (5) of the pillar portion being below the joining connection, in that glue is applied to the surfaces to be glued together, said surfaces provided with glue are pressed against each other and in this pressed condition said fastening means are driven in so that the hardening can take place under the holding influence of said fastening means.

**Revendications**

1. Système de liaison de poutres, avec un étançon traversant j(1) en bois, constitué par une plaque (4) disposée verticalement et fixée à la poutre parallèlement à sa direction longitudinale et dans son axe longitudinal, de façon à ne pas pouvoir pivoter, ladite plaque comportant un crochet qui présente à son extrémité inférieure une surface de support essentiellement horizontale et au moins une surface d'appui verticale, et par un bloc d'appui cruciforme conformé d'une seule pièce (3) et disposé dans l'étançon (1), dont les parties de plaque disposées verticalement se trouvent dans un même plan avec la plaque à crochët (4) correspondante, et présentent des surfaces d'ajustage pour la surface de support et la surface d'appui du crochet, caractérisé en ce que l'étançon présente une jointure à dents collées (2) dans la zone du bloc de support (3) d'une seule pièce, au-dessous des surfaces de support du bloc de support (3).

2. Procédé de production d'une liaison selon la revendication 1, caractérisé en ce que tout d'abord les surfaces de jointure sont pourvues de dents, que les parties d'étançon qui sont seulement réunies sans colle par la jointure sont rabotées ensemble, que les fentes (5) nécessaires sont pratiquées dans les parties d'étançon à joindre de même que les perçages pour les moyens de fixation des blocssupport, que le bloc de support (3) est enfilé dans les fentes (5) de la partie d'étançon située au-dessous de la jointure, que l'on appose alors la colle sur les surfaces, à encoller, que l'on presse ensemble les surfaces pourvues de colle les unes contre les autres, les moyens de fixation étant introduits pendant la compression, et qu'après l'introduction des moyens de fixation on supprime la compression de sorte que le durcissement peut se produire sous l'effet permanent des moyens de fixation.

# Fig.1

# Fig.2

F i g.3

a

b

c

d

e